# EUROPÄISCHE PATENTANMELDUNG

(11) **EP 3 974 972 A1**
(43) Veröffentlichungstag der Anmeldung: **30.03.2022**
(21) Anmeldenummer: 20198170.1
(22) Anmeldetag: 24.09.2020
(51) Int. Cl.: G06F 9/455, H04L 12/46, H04L 12/931, H04L 12/10, H04L 12/54, H04W 28/08, H04L 29/06

(54) **KOMMUNIKATIONSGERÄT, KOMMUNIKATIONSSYSTEM UND VERFAHREN ZUM BETRIEB EINES KOMMUNIKATIONSGERÄTS**

(71) Anmelder: Siemens Aktiengesellschaft, 80333 München (DE)
(72) Erfinder: Gottwald, Sven, 90475 Nürnberg (DE)

(57) **Zusammenfassung**

Ein Kommunikationsgerät zur Kopplung mehrerer weiterer Kommunikationsgeräte umfasst eine Ablaufsteuerungsumgebung (132), in die Ablaufsteuerungskomponenten (133, 134) zur dortigen Ausführung ladbar sind. Dabei weist die Ablaufsteuerungsumgebung eine Schnittstelle zum Zugriff auf ein Kopplungselement (120) und auf Sende- und Empfangseinheiten (111-118) des Kommunikationsgeräts auf. Außerdem ist eine vorgegebene Ablaufsteuerungskomponente (133) zur Kopplung mehrerer physikalischer bzw. virtueller Kommunikationsgeräte vorgesehen. Die vorgegebene Ablaufsteuerungskomponente ist dafür ausgestaltet und eingerichtet, über die Ablaufsteuerungsumgebung ausgewählte Sende- und Empfangseinheiten (115-118) exklusiv zu allokieren und separat von einer Controller-Funktionseinheit (130) des Kommunikationsgerät zur Weiterleitung von Datagrammen geschaltet miteinander zu verknüpfen.

## Beschreibung

Die vorliegende Erfindung betrifft ein Kommunikationsgerät, insbesondere einen Switch oder eine Bridge, zur Kopplung mehrerer weiterer Kommunikationsgeräte, ein das Kommunikationsgerät umfassendes Kommunikationssystem, insbesondere ein Kommunikationssystem zur Übermittlung zeitkritischer Daten, und ein Verfahren zum Betrieb des Kommunikationsgeräts.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

In EP 3270560 B1 ist ein Verfahren zum Aufbau gesicherter Kommunikationsverbindungen zu einem industriellen Automatisierungssystem beschrieben, bei dem eine Verbindungsverwaltungseinrichtung bei einem positiven Berechtigungsüberprüfungsergebnis Zugriffskontrollinformationen zum Aufbau einer verschlüsselten Kommunikationsverbindung zwischen einem ersten Kommunikationsgerät eines anfordernden Benutzers und einem ausgewählten zweiten Kommunikationsgerät für diese Kommunikationsgeräte bereitstellt. Dabei wird die Verbindungsverwaltungseinrichtung durch eine auf einem Firewall-System ablaufende Server-Instanz gebildet wird. Über eine verschlüsselte Kommunikationsverbindung zwischen dem ersten Kommunikationsgerät des anfordernden Benutzers und dem ausgewählten zweiten Kommunikationsgerät übermittelte Datenpakete werden für eine auf festgelegten Sicherheitsregeln basierende Überprüfung durch das Firewall-System entschlüsselt und bei erfolgreicher Überprüfung verschlüsselt zum ersten Kommunikationsgerät des anfordernden Benutzers oder zum ausgewählten zweiten Kommunikationsgerät weitergeleitet.

Aus EP 3618384 B1 ist bekannt, dass zur Simulation einer Verarbeitung von Reservierungsanfragen für Multicast-Datenströme in Kommunikationsnetzen hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt werden. Für der Control Plane zugeordnete Funktionen der Kommunikationsgeräte jeweils Simulationssystem-Komponenten bereitgestellt werden, die durch in einer Ablaufsteuerungsumgebung ausführbare Software-Container gebildet werden. Netzinfrastrukturgeräte werden auf der Data Plane durch mittels der Netzinfrastrukturgeräte jeweils bereitgestellte Ressourcen modelliert. Die den Kommunikationsgeräten zugeordneten Software-Container werden entsprechend einer vorgegebenen Topologie selektiv in der Ablaufsteuerungsumgebung ausgeführt und dort miteinander gekoppelt.

Die ältere europäische Patentanmeldung mit dem Anmeldeaktenzeichen 20193690.3 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

Mittels Software-implementierter, virtueller Switche können virtuelle Maschinen mit anderen virtuellen Maschinen kommunizieren. Üblicherweise können virtuelle Switche auf Netzwerkadapter eines jeweiligen Host-Systems zugreifen. Insbesondere unterstützen virtuelle Switche eine erhöhte Automatisierung von Netzwerkmanagement-Aufgaben.

Der vorliegenden Erfindung liegt die Aufgabe zugrunde, ein einfach zu wartendes und flexibel zu nutzendes Kommunikationsgerät anzugeben, das eine zuverlässige und performante Kopplung mehrerer physikalischer Kommunikationsgeräte ermöglicht, sowie ein geeignetes System und Verfahren zu dessen Betrieb schaffen, insbesondere unter Berücksichtigung von Echtzeitanforderungen seitens der zu koppelnden Kommunikationsgeräte.

Diese Aufgabe wird erfindungsgemäß durch ein Kommunikationsgerät mit den in Anspruch 1 angegebenen Merkmalen, durch ein Kommunikationssystem mit den in Anspruch 13 angegebenen Merkmalen und durch ein Verfahren mit den in Anspruch 14 angegebenen Merkmalen gelöst. Vorteilhafte Weiterbildungen sind in den abhängigen Ansprüchen angegeben.

Das erfindungsgemäße Kommunikationsgerät zur Kopplung mehrerer weiterer Kommunikationsgeräte umfasst mehrere Anschlüsse für die weiteren Kommunikationsgeräte, mehrere den Anschlüssen zugeordnete Sende- und Empfangseinheiten, ein Kopplungselement zur geschalteten Verknüpfung der Sende- und Empfangseinheiten und einen Pufferspeicher für über das Kopplungselement weiterzuleitende Datagramme. Außerdem ist eine den Sende- und Empfangseinheiten und dem Kopplungselement zugeordnete Controller-Funktionseinheit zur Verarbeitung eines Kommunikationsprotokollstapels vorgesehen.

Vorzugsweise ist das Kommunikationsgerät als Switch oder Bridge ausgestaltet. Dabei ist das Koppel-Element ein Backplane-Switch. Dementsprechend ist die Controller-Funktionseinheit vorteilhafterweise ein Controller für den Backplane Switch. Insbesondere ist die Controller-Funktionseinheit zur Implementierung von Funktionen gemäß Simple Network Management Protokoll (SNMP), Media Redundancy Protocol (MRP), High-availability Seamless Redundancy Protocol (HSR), Link-local Registration Protocol (LRP), Resource Allocation Protocol (RAP) bzw. zur Bereitstellung von VLAN-Funktionen ausgestaltet und eingerichtet.

Darüber hinaus umfasst das erfindungsgemäße Kommunikationsgerät einen Prozessor zur Verarbeitung von Programm-Code und einen Programm-Code-Speicher sowie eine mittels des Prozessors und des Speichers gebildete Ablaufsteuerungsumgebung. In diese Ablaufsteuerungsumgebung sind Ablaufsteuerungskomponenten zur dortigen Ausführung ladbar. Dabei weist die Ablaufsteuerungsumgebung eine Schnittstelle zum Zugriff auf das Kopplungselement und auf die Sende- und Empfangseinheiten auf. Außerdem ist eine vorgegebene Ablaufsteuerungskomponente zur Kopplung mehrerer physikalischer bzw. virtueller Kommunikationsgeräte vorgesehen. Dieses vorgegebene Ablaufsteuerungskomponente ist dafür ausgestaltet und eingerichtet, über die Ablaufsteuerungsumgebung ausgewählte Sende- und Empfangseinheiten exklusiv zu allokieren und separat von der Controller-Funktionseinheit zur Weiterleitung von Datagrammen geschaltet miteinander zu verknüpfen. Mit der vorgegebenen Ablaufsteuerungskomponente gekoppelte virtuelle Kommunikationsgeräte können insbesondere durch weitere Ablaufsteuerungskomponenten gebildet sein.

Vorzugsweise ist die vorgegebene Ablaufsteuerungskomponente dafür ausgestaltet und eingerichtet ist, einen virtuellen Switch zu implementieren. Insbesondere kann der der virtuelle Switch dafür ausgestaltet und eingerichtet sein, eine Steuerung einer Weiterleitung von Datagrammen zwischen Kommunikationsgeräten zu übernehmen, die an zumindest einem physikalischen Switch angeschlossen sind. Beispielsweise können mittels des virtuellen Switchs ausgewählte Anschlüsse des Kommunikationsgeräts bzw. realen Switchs als Ring-Ports entsprechend dem Media Redundancy Protocol oder High-availability Seamless Redundancy Protocol konfiguriert werden. Dabei kann der virtuelle Switch Funktionen eines MRP-Redundanz-Managers bzw. HSR-Duplikate-Filterfunktionen wahrnehmen.

Mit der vorliegenden Erfindung werden eine Verwendung und ein Betrieb von virtuellen Switchen innerhalb von realen Switchen ermöglicht. Hierdurch wird eine verbesserte Auslastung der Netzwerkressourcen erzielt. Darüber hinaus können lokale Überlastungen von Kommunikationsgeräten durch eine einfache und schnelle Verlagerung von Kommunikationssteuerungsfunktionen in einen virtuellen Switch innerhalb desselben oder eines anderen realen Switchs vermieden bzw. kompensiert werden. Durch eine derartige Verlagerung von Kommunikationssteuerungsfunktionen können Netzwerkkomponenten beispielsweise ihm Rahmen von Wartungsaufgaben komplett oder teilweise heruntergefahren werden, ohne dass dies zu einer eingeschränkten Kommunikation für angeschlossene Kommunikationsgeräte bzw. Teilnehmer führt. Darüber hinaus können mittels eines virtuellen Switchs innerhalb eines realen Switchs selektiv Redundanzfunktionen verfügbar gemacht werden.

Entsprechend einer bevorzugten Ausführungsform der vorliegenden Erfindung ist der mittels der vorgegebene Ablaufsteuerungskomponente realisierte virtuelle Switch dafür eingerichtet und ausgestaltet, insbesondere in einem Wartungsszenario oder bei Topologieänderungen einen Link zwischen dem Kommunikationsgerät und einem physikalischen Switch aufzubauen und Datenverkehr von ausgewählten Anschlüssen des physikalischen Switchs auf durch den virtuellen Switch exklusiv allokierte Abschlüsse des Kommunikationsgeräts zu spiegeln. Ferner ist kann der virtuelle Switch dafür eingerichtet und ausgestaltet sein, nach erfolgreicher Spiegelung des Datenverkehrs ein Statussignal an den physikalischen Switch zu senden, durch das eine Controller-Funktionseinheit des physikalischen Switchs abschaltbar ist. Hierdurch ist eine zuverlässige Verlagerung von Kommunikationssteuerungsfunktionen durch einen koordinierten Betrieb sämtlicher beteiligter Kommunikationsgeräte gewährleistet.

Vorzugsweise sind bzw. umfassen die Ablaufsteuerungskomponenten Software-Container, die jeweils dafür ausgestaltet und eingerichtet sind, von anderen Software-Containern oder Container-Gruppen isoliert innerhalb der Ablaufsteuerungsumgebung auf einem Host-Betriebssystem abzulaufen, das im Kommunikationsgerät installiert ist. Grundsätzlich können für die Ablaufsteuerungskomponenten auch alternative Micro-Virtualisierungskonzepte, wie Snaps, verwendet werden. Dementsprechend kann die Ablaufsteuerungsumgebung kann eine Docker Engine oder einen Snap Core umfassen, die bzw. der im Kommunikationsgerät abläuft.

Insbesondere nutzen die Software-Container jeweils gemeinsam mit anderen auf dem Kommunikationsgerät ablaufenden Software-Containern einen Kernel des Host-Betriebssystems des Kommunikationsgeräts. Speicherabbilder für die Software-Container können beispielsweise aus einem durch eine Vielzahl von Nutzern lesend bzw. schreibend zugreifbaren Speicher- und Bereitstellungssystem abgerufen werden. Darüber hinaus sind die Ablaufsteuerungskomponenten vorteilhafterweise jeweils vom Kommunikationsgerät auf ein anderes, im Wesentlichen gleichartiges Kommunikationsgerät bzw. auf eine Server-Einrichtung zur dortigen Ausführung migrierbar bzw. auf anderen Kommunikationsgeräten bzw. auf Server-Einrichtungen zeitgleich ausführbar.

Entsprechend einer besonders bevorzugten Ausgestaltung der vorliegenden Erfindung sind ausgewählte Ablaufsteuerungskomponenten dafür ausgestaltet und eingerichtet, Dienste bzw. Funktionen eines industriellen Automatisierungssystems bereitzustellen. Dabei können die Dienste jeweils mehrere gleichartige oder identische Ablaufsteuerungskomponenten umfassen, die jeweils dafür ausgestaltet und eingerichtet sind, durch unterschiedliche Kommunikationsgeräte bzw. Server-Einrichtungen bereitgestellt zu werden. Auf diese Weise können durch das Kommunikationsgerät auch Automatisierungsfunktionen redundant bzw. hoch verfügbar bereitgestellt werden.

Das erfindungsgemäße Kommunikationssystem umfasst zumindest ein Kommunikationsgerät entsprechend vorangehenden Ausführungen sowie zumindest ein weiteres, im Wesentlichen gleichartiges Kommunikationsgerät bzw. zumindest eine Server-Einrichtung. Außerdem ist eine dem zumindest einen Kommunikationsgerät bzw. der zumindest einen Server-Einrichtung zugeordnete Überwachungseinrichtung vorgesehen. Die Überwachungseinrichtung ist dafür ausgestaltet und eingerichtet, ein Anlegen, ein Löschen bzw. eine Änderung von Ablaufsteuerungskomponenten des zumindest einen Kommunikationsgeräts bzw. der zumindest einen Server-Einrichtung zu erfassen und die Ablaufsteuerungskomponenten mit ihrem jeweiligen Ausführungsstatus zu registrieren. Dabei umfasst das Anlegen, das Löschen bzw. die Änderung der Ablaufsteuerungskomponenten jeweils ein Allokieren oder Freigeben von Ressourcen im jeweiligen Kommunikationsgerät bzw. in der jeweiligen Server-Einrichtung. Mit dem erfindungsgemäßen Kommunikationssystem können insbesondere voneinander abhängige Dienste zuverlässig orchestriert werden.

Das erfindungsgemäße Verfahren ist zum Betrieb eines Kommunikationsgeräts entsprechend vorangehenden Ausführungen vorgesehen, wobei das Kommunikationsgerät als Switch oder Bridge ausgestaltet ist. Mittels einer vorgegebenen Ablaufsteuerungskomponente des Kommunikationsgeräts wird ein virtueller Switch implementiert. Der virtuelle Switch übernimmt eine Steuerung einer Weiterleitung von Datagrammen zwischen Kommunikationsgeräten, die an zumindest einem physikalischen Switch angeschlossen sind. Vorzugsweise übernimmt der virtuelle Switch die Steuerung der Weiterleitung, indem der virtuelle Switch einen Link zwischen dem Kommunikationsgerät und dem physikalischen Switch aufbaut und Datenverkehr von ausgewählten Anschlüssen des physikalischen Switchs auf durch den virtuellen Switch exklusiv allokierte Abschlüsse des Kommunikationsgeräts spiegelt. Nach erfolgreicher Spiegelung des Datenverkehrs sendet der virtuelle Switch vorteilhafterweise ein Statussignal an den physikalischen Switch, wodurch eine Controller-Funktionseinheit des physikalischen Switchs abgeschaltet wird.

Die vorliegende Erfindung wird nachfolgend an einem Ausführungsbeispiel anhand der Zeichnung näher erläutert. Es zeigt
- Figur 1: einen Aufbau eines Switchs mit einem zusätzlichen, integrierten virtuellen Switch,
- Figur 2: eine schematische Darstellung einer Verlagerung einer Steuerung von Weiterleitungsfunktionen eines weiteren Switchs in den virtuellen Switch gemäß Figur 1.

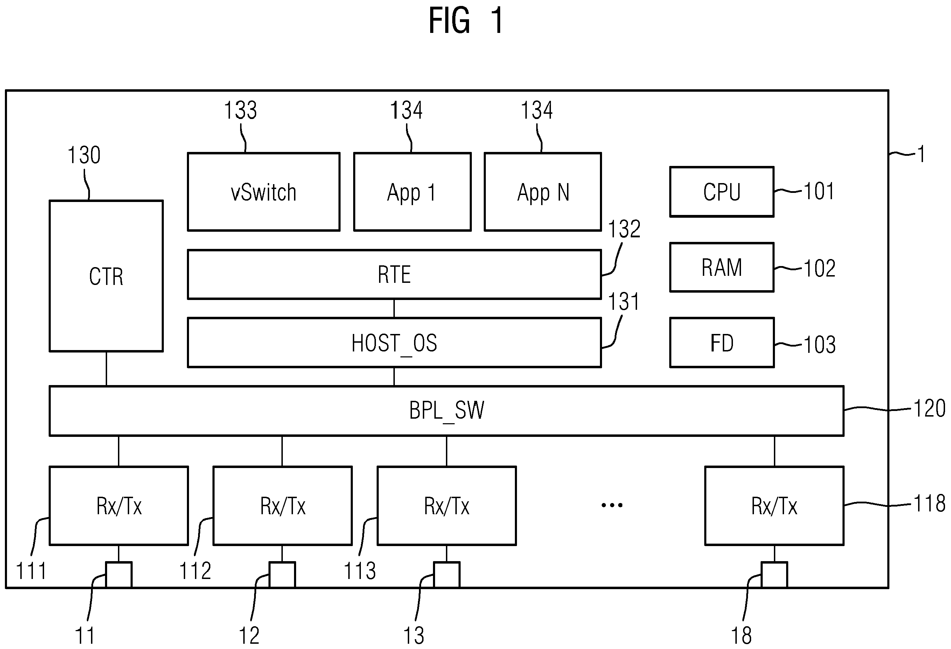

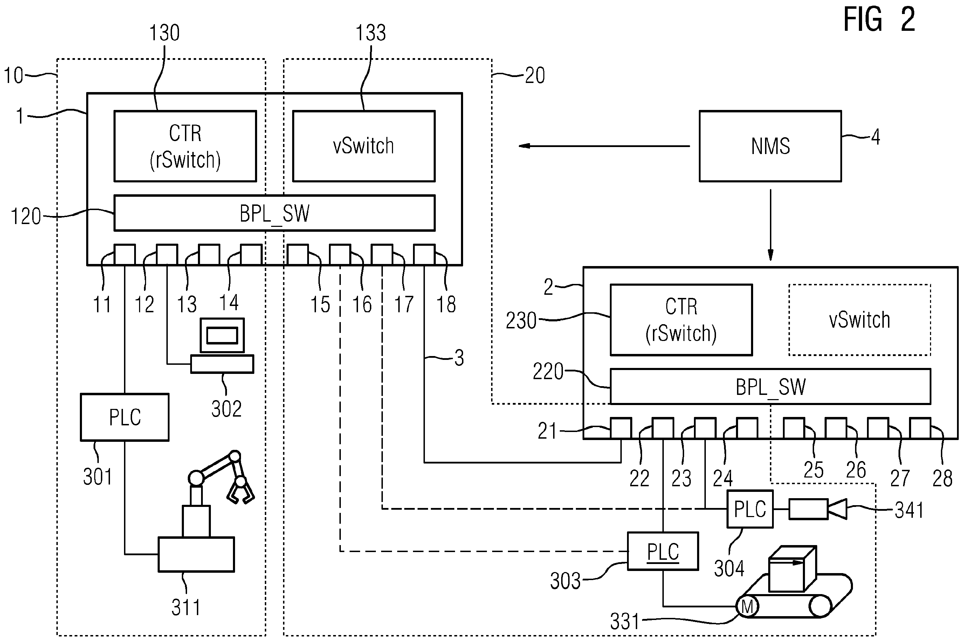

Der in Figur 1 dargestellte Switch 1 ist im vorliegenden Ausführungsbeispiel als Ethernet-Switch ausgestaltet und dient zur Kopplung mehrerer weiterer Kommunikationsgeräte. Nachfolgende Ausführungen gelten in analoger Weise für ein als Bridge ausgestaltetes Kommunikationsgerät zur Kopplung mehrerer weiterer Kommunikationsgeräte. An den Switch 1 können insbesondere Automatisierungsgeräte mit Kommunikationsmodulen, wie speicherprogrammierbare Steuerungen 301, 303, 304, Bedien- und Beobachtungsstationen 302, I/O-Controller und I/O-Module angeschlossen werden (siehe Figur 2). Der Switch 1 sowie die an den Switch 1 angeschlossenen Kommunikations- bzw. Automatisierungsgeräte 301-304 sind vorzugsweise als Komponenten einen Time-Sensitive Network ausgestaltet, insbesondere entsprechend IEEE 802.1Q, IEEE 802.1AB, IEEE 802.1AS, IEEE 802.1BA bzw. IEEE 802.1CB.

Speicherprogrammierbare Steuerungen 301, 303, 304 umfassen typischerweise jeweils ein Kommunikationsmodul, eine Zentraleinheit sowie zumindest eine Eingabe/Ausgabe-Einheit. Die Eingabe/Ausgabe-Einheiten dienen einem Austausch von Steuerungs- und Messgrößen zwischen der speicherprogrammierbaren Steuerung 301, 303, 304 und einer durch die speicherprogrammierbare Steuerung 301, 303, 304 gesteuerten Maschine oder Vorrichtung 311, 331, 341. Die Zentraleinheit ist insbesondere für eine Ermittlung geeigneter Steuerungsgrößen aus erfassten Messgrößen vorgesehen. Obige Komponenten der speicherprogrammierbaren Steuerungen 301, 303, 304 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 302 dient zur Visualisierung von Prozessdaten bzw. Mess- und Steuerungsgrößen, die durch speicherprogrammierbare Steuerungen, I/O-Controller, I/O-Module oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Entsprechend Figur 1 umfasst der Switch mehrere Ports 11-18 für Kommunikations- bzw. Automatisierungsgeräte, mehrere den Ports 11-18 zugeordnete Sende- und Empfangseinheiten 111-118, einen Backplane-Switch 120 zur geschalteten Verknüpfung der Sende- und Empfangseinheiten 111-118 und einen Pufferspeicher für über den Backplane-Switch 120 weiterzuleitende Datagramme. Die Sende- und Empfangseinheiten 111-118 sind im vorliegenden Ausführungsbeispiel mittels PHY- und MAC-Schaltkreisen implementiert. Außerdem umfasst der Switch 1 einen den Sende- und Empfangseinheiten 111-118 und dem Backplane-Switch zugeordneten Controller 130, der im vorliegenden Ausführungsbeispiel Software-implementiert ist. Der Controller 130 dient zur Verarbeitung eines Kommunikationsprotokollstapels und implementiert insbesondere Funktionen gemäß Simple Network Management Protokoll (SNMP), Media Redundancy Protocol (MRP), High-availability Seamless Redundancy Protocol (HSR), Link-local Registration Protocol (LRP), Resource Allocation Protocol bzw. zur Bereitstellung von VLAN-Funktionen.

Darüber hinaus umfasst der Switch 1 einen Prozessor 101 zur Verarbeitung von Programm-Code, einen Arbeitsspeicher 102, in den der Programm-Code ladbar ist, sowie eine Speichereinheit 103, insbesondere eine Festplatte, einen Flash- oder SSD-Speicher, zur nichtflüchtigen Speicherung des Programm-Codes. Im Switch 1 ist ein Host-Betriebssystem 131 installiert, auf dem mittels des Prozessors 102, des Arbeitsspeichers 102 und der Speichereinheit 103 zur nichtflüchtigen Speicherung eine Ablaufsteuerungsumgebung 132, beispielsweise eine Docker Engine, für Software-Container 133, 134 ausgeführt wird. Die Ablaufsteuerungsumgebung 132 nutzt Treiber des Host-Betriebssystems 131 zum Zugriff auf den Backplane-Switch 120 und auf die Sende- und Empfangseinheiten 111-118 und stellt entsprechende Schnittstellen für die Software-Container 133, 134 bereit, die in die Ablaufsteuerungsumgebung 132 zur dortigen Ausführung ladbar sind. Dabei sind die Software-Container 133, 134 jeweils dafür konfiguriert, von anderen Software-Containern oder Container-Gruppen bzw. Pods isoliert innerhalb der Ablaufsteuerungsumgebung 132 abzulaufen. Andererseits nutzen die Software-Container 133, 134 jeweils gemeinsam mit anderen auf dem Switch 1 ablaufenden Software-Containern einen Kernel des Host-Betriebssystems 1131 des Switchs 1.

Eine Isolation der Software-Container 133, 134 bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Der Switch 1 umfasst einen vorgegebenen Software-Container 133 zur Kopplung mehrerer physikalischer bzw. virtueller Kommunikationsgeräte umfasst. Die virtuellen Kommunikationsgeräte sind beispielsweise durch weitere Software-Container auf dem Switch 1, einem weiteren, gleichartigen Switch 2 oder durch Software-Container oder virtuelle Maschinen auf einer Server-Einrichtung gebildet. Der vorgegebene Software-Container 133 ist dafür ausgestaltet und eingerichtet, einen virtuellen Switch zu implementieren. Der virtuelle Switch 133 ist dafür vorgesehen, über die Ablaufsteuerungsumgebung 132 ausgewählte Sende- und Empfangseinheiten des Switchs 1 exklusiv zu allokieren und separat vom Controller 130 zur Weiterleitung von Datagrammen geschaltet miteinander zu verknüpfen. Damit kann der virtuelle Switch 133 eine Steuerung der Weiterleitung von Datagrammen zwischen Kommunikationsgeräten 301-304 übernehmen, die an zumindest einem physikalischen Switch 1, 2 angeschlossen sind.

Entsprechend der Darstellung in Figur 2 kann der virtuelle Switch 133 beispielsweise im Rahmen von Wartungsarbeiten oder Topologieänderungen zur Verlagerung der Steuerung von Weiterleitungsfunktionen vom Switch 2 genutzt werden. Der Switch 2 ist im Wesentlichen gleichartig wie der Switch 1 und umfasst ebenfalls mehrere Anschlüsse 21-28, einen Backplane-Switch 220 sowie einen Controller 230 für den Backplane-Switch 220. Optional kann auch der Switch 2 einen virtuellen Switch umfassen.

Der in den physikalischen Switch 1 integrierte virtuelle Switch 133 übernimmt die Steuerung von Weiterleitungsfunktionen vom Switch 2, indem der virtuelle Switch 133 über eine bestehende Übertragungsstrecke 3 zwischen den beiden Switchen 1, 2 einen Link aufbaut und Datenverkehr von ausgewählten Ports 21-24 des Switchs 2 auf durch den virtuellen Switch 133 exklusiv allokierte Ports 14-18 des Switchs 1 spiegelt. Nach erfolgreicher, in Figur 2 durch gestrichelte Linien angedeuteter Spiegelung des Datenverkehrs sendet der virtuelle Switch 133 ein Statussignal an den Switch 2, durch das der Controller 230 des Switchs 2 in Bezug auf die ausgewählten Anschlüsse 21-24 abgeschaltet wird. Somit weist der Switch 1 zwei logisch voneinander getrennte Port-Gruppen 10, 20 mit diesen Port-Gruppen zugeordneten Kommunikationsgeräten 301-302, 303-304 auf, die einerseits durch den Controller 130 des Switchs 1 und andererseits durch den virtuellen switch 133 gesteuert werden.

Im vorliegenden Ausführungsbeispiel sind ausgewählte Software-Container 134 auf dem Switch 1 dafür vorgesehen, Dienste bzw. Funktionen eines industriellen Automatisierungssystems bereitzustellen. Dabei können die Dienste jeweils mehrere gleichartige oder identische Software-Container bzw. Pods umfassen, die durch unterschiedliche Switche 1, 2 bzw. Server-Einrichtungen bereitgestellt werden. Eine Bereitstellung mehrerer gleichartiger Dienste bzw. Steuerungsanwendungen auf unterschiedlichen Switchen 1, 2 bzw. Server-Einrichtungen gleichzeitig kann beispielsweise mittels Kubernetes-Daemon Sets durch eine Überwachungseinrichtung 4 gesteuert werden, die insbesondere den Switchen 1, 2 administrativ zugeordnet ist.

Im vorliegenden Ausführungsbeispiel ist die Überwachungseinrichtung dafür konfiguriert, ein Anlegen, ein Löschen bzw. eine Änderung von Software-Containern bzw. Pods auf Switchen 1, 2 bzw. auf Server-Einrichtungen zu erfassen und die Software-Container bzw. Pods mit ihrem jeweiligen Ausführungsstatus zu registrieren. Dabei umfasst das Anlegen, das Löschen bzw. die Änderung der Ablaufsteuerungskomponenten jeweils ein Allokieren oder Freigeben von Ressourcen im jeweiligen Switch 1, 2 bzw. in der jeweiligen Server-Einrichtung.

Darüber hinaus können die Software-Container 133, 134, insbesondere der virtuelle Switch 133, jeweils vom Switch 1 auf eine anderen, im Wesentlichen gleichartigen Switch 2 bzw. auf eine Server-Einrichtung zur dortigen Ausführung migriert bzw. auf anderen Switchen bzw. Server-Einrichtungen zeitgleich ausgeführt werden. Damit können Steuerungsfunktionen innerhalb eines den Switch 1 umfassenden Kommunikationssystem je nach Bedarf bzw. Erfordernis verschoben werden. Hierdurch lassen sich insbesondere Redundanzfunktionen einfach zu skalieren bereitstellen.

## Patentansprüche

1. Kommunikationsgerät zur Kopplung mehrerer weiterer Kommunikationsgeräte, wobei das Kommunikationsgerät
- mehrere Anschlüsse (11-18) für die weiteren Kommunikationsgeräte (301-304), mehrere den Anschlüssen zugeordnete Sende- und Empfangseinheiten (111-118), ein Kopplungselement (120) zur geschalteten Verknüpfung der Sende- und Empfangseinheiten und einen Pufferspeicher für über das Kopplungselement weiterzuleitende Datagramme,
- eine den Sende- und Empfangseinheiten und dem Kopplungselement zugeordnete Controller-Funktionseinheit (130) zur Verarbeitung eines Kommunikationsprotokollstapels,
- einen Prozessor (101) zur Verarbeitung von Programm-Code und einen Programm-Code-Speicher (102, 103),
- eine mittels des Prozessors und des Speichers gebildete Ablaufsteuerungsumgebung (132), in die Ablaufsteuerungskomponenten (133, 134) zur dortigen Ausführung ladbar sind, wobei die Ablaufsteuerungsumgebung eine Schnittstelle zum Zugriff auf das Kopplungselement und auf die Sende- und Empfangseinheiten aufweist, und
- eine vorgegebene Ablaufsteuerungskomponente (133) zur Kopplung mehrerer physikalischer und/oder virtueller Kommunikationsgeräte umfasst,
- wobei die vorgegebene Ablaufsteuerungskomponente dafür ausgestaltet und eingerichtet ist, über die Ablaufsteuerungsumgebung ausgewählte Sende- und Empfangseinheiten (115-118) exklusiv zu allokieren und separat von der Controller-Funktionseinheit zur Weiterleitung von Datagrammen geschaltet miteinander zu verknüpfen.

2. Kommunikationsgerät nach Anspruch 1,
bei dem die Ablaufsteuerungskomponenten Software-Container sind oder umfassen, die jeweils dafür ausgestaltet und eingerichtet sind, von anderen Software-Containern oder Container-Gruppen isoliert innerhalb der Ablaufsteuerungsumgebung auf einem Host-Betriebssystem (131) abzulaufen, das im Kommunikationsgerät installiert ist.

3. Kommunikationsgerät nach Anspruch 2,
bei dem die Software-Container jeweils gemeinsam mit anderen auf dem Kommunikationsgerät ablaufenden Software-Containern einen Kernel des Host-Betriebssystems des Kommunikationsgeräts nutzen.

4. Kommunikationsgerät nach einem der Ansprüche 2 oder 3,
bei dem Speicherabbilder für die Software-Container aus einem durch eine Vielzahl von Nutzern lesend und/oder schreibend zugreifbaren Speicher- und Bereitstellungssystem abrufbar sind.

5. Kommunikationsgerät nach einem der Ansprüche 1 bis 4,
bei dem die Ablaufsteuerungskomponenten jeweils vom Kommunikationsgerät (1) auf ein anderes, im Wesentlichen gleichartiges Kommunikationsgerät (2) und/oder auf eine Server-Einrichtung zur dortigen Ausführung migrierbar und/oder auf anderen Kommunikationsgeräten und/oder auf Server-Einrichtungen zeitgleich ausführbar sind.

6. Kommunikationsgerät nach einem der Ansprüche 1 bis 5,
bei dem ausgewählte Ablaufsteuerungskomponenten dafür ausgestaltet und eingerichtet sind, Dienste und/oder Funktionen eines industriellen Automatisierungssystems bereitzustellen.

7. Kommunikationsgerät nach Anspruch 6,
bei dem die Dienste jeweils mehrere gleichartige oder identische Ablaufsteuerungskomponenten umfassen, die jeweils dafür ausgestaltet und eingerichtet sind, durch unterschiedliche Kommunikationsgeräte und/oder Server-Einrichtungen bereitgestellt zu werden.

8. Kommunikationsgerät nach einem der Ansprüche 1 bis 7,
bei dem die virtuellen Kommunikationsgeräte durch weitere Ablaufsteuerungskomponenten gebildet sind.

9. Kommunikationsgerät nach einem der Ansprüche 1 bis 8,
bei dem das Kommunikationsgerät als Switch oder Bridge ausgestaltet ist, bei dem das Koppel-Element ein Backplane-Switch ist, bei dem die Controller-Funktionseinheit ein Controller für den Backplane Switch ist und bei dem die Controller-Funktionseinheit zur Implementierung von Funktionen gemäß Simple Network Management Protokoll, Media Redundancy Protocol, High-availability Seamless Redundancy Protocol, Link-local Registration Protocol, Resource Allocation Protocol und/oder zur Bereitstellung von VLAN-Funktionen ausgestaltet und eingerichtet ist.

10. Kommunikationsgerät nach Anspruch 9,
bei dem die vorgegebene Ablaufsteuerungskomponente dafür ausgestaltet und eingerichtet ist, einen virtuellen Switch zu implementieren, und bei dem der virtuelle Switch dafür ausgestaltet und eingerichtet ist, eine Steuerung einer Weiterleitung von Datagrammen zwischen Kommunikationsgeräten zu übernehmen, die an zumindest einem physikalischen Switch angeschlossen sind.

11. Kommunikationsgerät nach Anspruch 10,
bei dem der virtuelle Switch (133) dafür eingerichtet und ausgestaltet ist, einen Link (3) zwischen dem Kommunikationsgerät (1) und einem physikalischen Switch (2) aufzubauen und Datenverkehr von ausgewählten Anschlüssen (21-24) des physikalischen Switchs auf durch den virtuellen Switch exklusiv allokierte Abschlüsse des Kommunikationsgeräts zu spiegeln.

12. Kommunikationsgerät nach Anspruch 11,
bei dem der virtuelle Switch dafür eingerichtet und ausgestaltet ist, nach erfolgreicher Spiegelung des Datenverkehrs ein Statussignal an den physikalischen Switch zu senden, durch das eine Controller-Funktionseinheit des physikalischen Switchs abschaltbar ist.

13. Kommunikationssystem mit
- zumindest einem Kommunikationsgerät entsprechend einem der Ansprüche 1 bis 12,
- zumindest einem weiteren, im Wesentlichen gleichartigen Kommunikationsgerät und/oder zumindest einer Server-Einrichtung,
- einer dem zumindest einen Kommunikationsgerät und/oder der zumindest einen Server-Einrichtung zugeordnete Überwachungseinrichtung,
- wobei die Überwachungseinrichtung dafür ausgestaltet und eingerichtet ist, ein Anlegen, ein Löschen und/oder eine Änderung von Ablaufsteuerungskomponenten des zumindest einen Kommunikationsgeräts und/oder der zumindest einen Server-Einrichtung zu erfassen und die Ablaufsteuerungskomponenten mit ihrem jeweiligen Ausführungsstatus zu registrieren,
- wobei das Anlegen, das Löschen und/oder die Änderung der Ablaufsteuerungskomponenten jeweils ein Allokieren oder Freigeben von Ressourcen im jeweiligen Kommunikationsgerät und/oder in der jeweiligen Server-Einrichtung umfasst.

14. Verfahren zum Betrieb eines Kommunikationsgeräts nach einem der Ansprüche 1 bis 12, bei dem
- das Kommunikationsgerät als Switch oder Bridge ausgestaltet ist,
- mittels einer vorgegebenen Ablaufsteuerungskomponente des Kommunikationsgeräts ein virtueller Switch implementiert wird,
- der virtuelle Switch eine Steuerung einer Weiterleitung von Datagrammen zwischen Kommunikationsgeräten übernimmt, die an zumindest einem physikalischen Switch angeschlossen sind.

15. Verfahren nach Anspruch 14,
bei dem der virtuelle Switch die Steuerung der Weiterleitung übernimmt, indem der virtuelle Switch einen Link zwischen dem Kommunikationsgerät und dem physikalischen Switch aufbaut und Datenverkehr von ausgewählten Anschlüssen des physikalischen Switchs auf durch den virtuellen Switch exklusiv allokierte Abschlüsse des Kommunikationsgeräts spiegelt.

16. Verfahren nach Anspruch 15,
bei dem der virtuelle Switch nach erfolgreicher Spiegelung des Datenverkehrs ein Statussignal an den physikalischen Switch sendet und bei dem eine Controller-Funktionseinheit des physikalischen Switchs durch das Statussignal abgeschaltet wird.
